# EUROPEAN PATENT APPLICATION

(11) **EP 3 409 440 A1**
(43) Date of publication of application: **05.12.2018**
(21) Application number: 16888052.4
(22) Date of filing: 05.10.2016
(51) Int. Cl.: B29C 45/16, B29C 45/26, B29L 9/00

(54) **RESIN MOLDED ARTICLE AND METHOD FOR PRODUCING SAME**

(30) Priority: 29.01.2016 JP 2016016444
(71) Applicant: Nippon Thermostat Co., Ltd., Kiyose-shi Tokyo 204-0003 (JP)
(72) Inventor: TSUKAMOTO, Daisuke, Kiyose-shi Tokyo 204-0003 (JP); MIKAMI, Susumu, Kiyose-shi Tokyo 204-0003 (JP); ABURAKAWA, Masahiro, Kiyose-shi Tokyo 204-0003 (JP); SUDA, Hiroshi, Kiyose-shi Tokyo 204-0003 (JP)
(74) Representative: Jannig & Repkow
(86) International application number: PCT/JP2016/079584
(87) International publication number: WO 2017/130467

(57) **Abstract**

[Problem] A molded resin article and a method of manufacturing a molded resin article that suppresses generation of portions of reduced bonding strength while suppressing separation at the interface between a bond portion (secondary molding resin) and a first body and a second body on the other.

[Solution] A first contact surface 9a contacting the second body formed perpendicular to the main surface F1 of the first body, a second contact surface 10a formed perpendicular to the main surface F2 of the second body and contacting the first body, and a bond portion bonding together the first body and the second body, formed by injecting molten resin into a resin channel 11 formed by contacting the first contact surface 9a against the second body 1B and contacting the second contact 10a surface against the first body 1A and solidifying the molten resin.

## Description

### BACKGROUND

### Technical Field

The present invention relates to a molded resin article and a method for manufacturing the same, for example, a molded resin article for a manifold device or the like used when circulating coolant between fluid passages formed inside an internal combustion engine and a radiator, and a method for manufacturing the same.

### Background Art

Molded resin articles have been used in various fields. For example, in motor vehicles, a manifold device that is produced by resin molding is used to circulate coolant between fluid passages formed in the internal combustion engine and the radiator.

The present applicant has proposed this manifold device in Patent Documents 1 and 2.

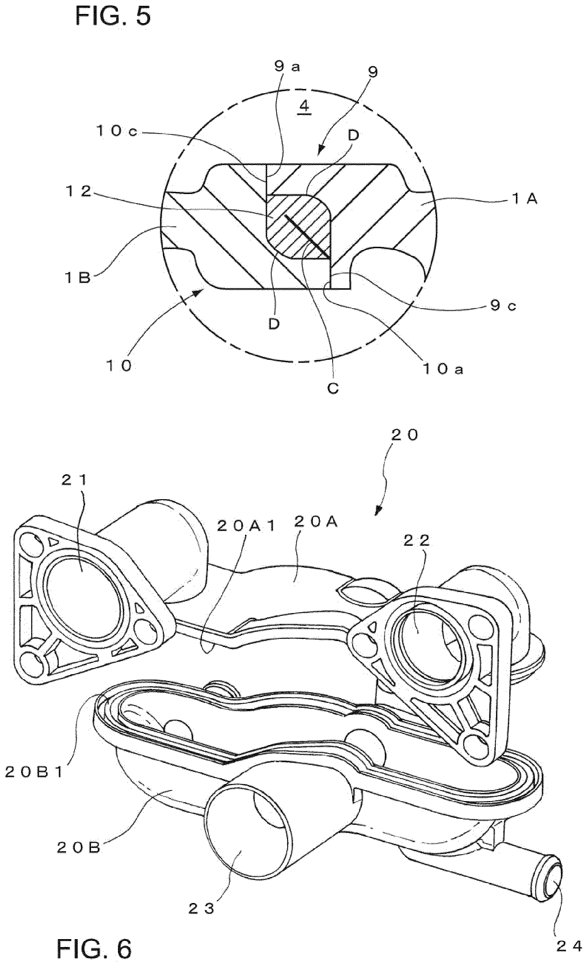

To explain this proposed manifold device with reference to FIG. 6, a manifold device 20 is constructed of a first body 20A molded from synthetic resin and a second body 20B molded from synthetic resin. In the first body 20A, for example, coolant intake pipes 21, 22 are formed, and in the second body 10B, a communication pipe 23 to the radiator and a communication pipe 24 to an EGR cooler are formed.

The first body 20A and the second body 20B are provided with reciprocally open edge-shaped bond portions 20A1 and 20B1. The bond portions 20A1 and 20B1 are joined together by vibration bonding welding, ultrasonic welding and thermal crimping to form a single casing shape.

However, when joining the first body 20A and the second body 20B into a single unit by vibration welding or the like, there was a problem in that the shapes of the bond portions 20A1 and 20B1 in the first body 20A and the second body 20B are limited. That is, if the shapes of the first body 20A and the second body 20B become complicated (that is, the bond portions 20A1 and 20B1 become complicated), it is difficult to use vibration welding and the like.

As a method for solving this problem, there is a die slide injection molding method (hereinafter referred to as DSI molding). DSI molding is introduced in Patent Document 3, for example. The DSI molding shown in Patent Document 3 will be described with reference to FIG. 7.

First, a synthetic resin is injection-molded using an upper mold and a lower mold to form a container body 30 (a primary molded article), and synthetic resin is injection-molded using a different upper mold and lower mold, and a lid 31 (a primary molded article) is molded.

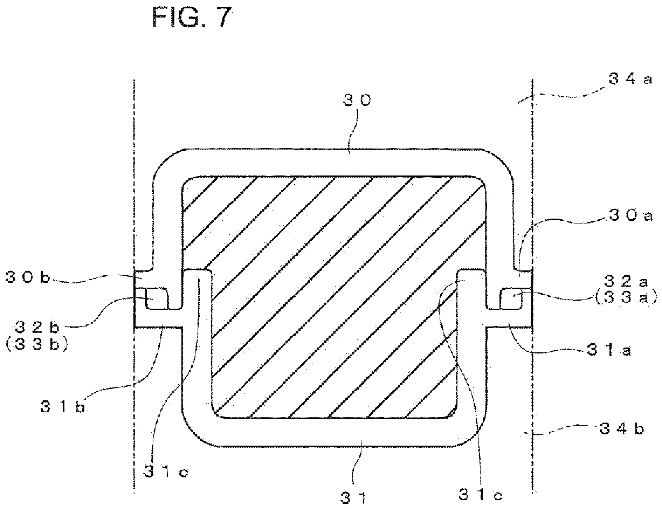

Then, as shown in FIG. 7, the container body 30 (primary molded product) and the lid 31 (primary molded product) are put into different molds, that is, a mold (upper mode) 34a and a mold (lower mold) 34b.

At this time, flanges 30a, 30b and flanges 31 a, 31 b are brought into contact with each other. Then, resin channels 32a, 32b (later bond portions 33a, 33b) which are the spaces formed for inflow of the resin are formed between the flanges 30a and 31 a and between the flanges 30b and 31 b.

A back-up rib 31c is formed in the lid 31 (primary molded article). The back-up rib 31 c is provided to prevent deformation of the resin channels 32a, 32b inward when the molten resin is injected into the resin channels 32a, 32b.

That is, in the molds 34a and 34b, the container body 30 and the lid 31 are abutted against each other and the molten resin is injected into the resin channels 32a and 32b through a resin injection path (not shown). As a result, the surface layers inside the resin channels 32a, 32b are melted and the molten resin is solidified to form bond portions 33a, 33b, by which the container body 30 and the lid 31 are joined together.

In this way, DSI molding can be applied even to a complicated molded resin article (manifold device) having a shape that is difficult for vibration welding, provided that bond portions33a , 33b which can be filled with resin (resin channels32a, 32b) can be formed between the flanges.

### Prior Art Documents

### Patent document

Patent Document 1 Japanese Patent No. 4892020
Patent Document 2 Japanese Patent No. 5019646
Patent Document 3 Japanese Patent No. 3748506

### SUMMARY OF THE INVENTION

### Technical Problem

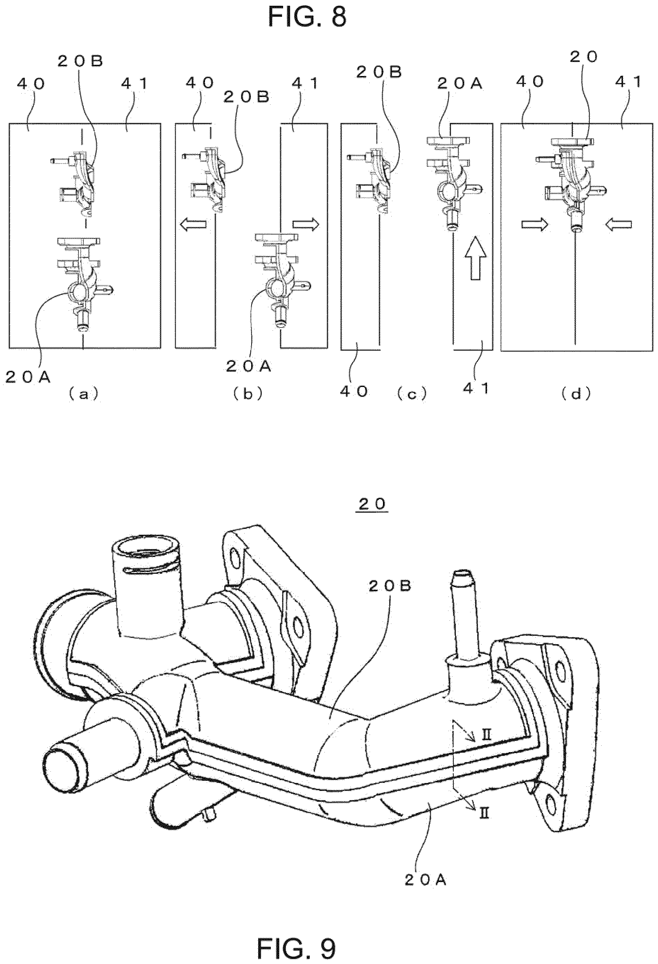

A case in which the die slide injection molding method (DSI molding) is applied to a molded resin article having a complicated shape such as a manifold device will be described in detail with reference to FIGS. 8 to 10. It is to be noted that although FIGS. 8 to 10 show a manifold device that is different in shape from the manifold device shown in FIG. 6, members corresponding to the members shown in FIG. 6 are denoted by the same reference numerals and a detailed description thereof will be omitted.

With the die slide injection molding method (DSI molding), to mold the manifold device 20, as shown in FIG. 8 (a), the molds 40, 41 are joined to form the first body 20A and the second body 20B. That is, primary molding is performed to produce a primary molded product.

Thereafter, as shown in FIG. 8 (b), the molds 40 and 41 are removed, and one of the molds 41 is moved in the arrow direction (see FIG. 8 (c)) to combine the first body 20 A and the second body 20 B.

Further, in a state in which the first body 20A and the second body 20B are combined, molten resin is injected into a resin channel (not shown) and secondary molding is performed.

That is, the injected molten resin and surface of the primary molded article formed thereby solidify to form a bonded part, and with this bond portion the first body 20A and the second body 20B are formed into a single unit (see FIG. 8 (d), FIG. 9).

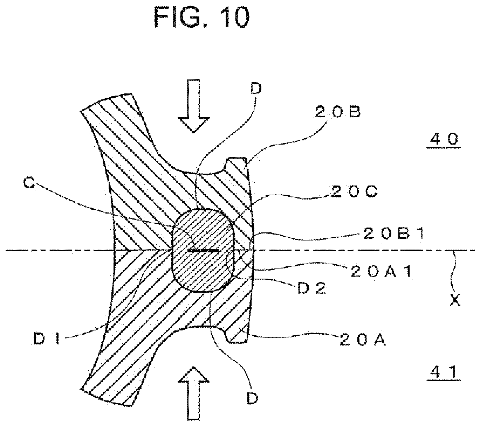

The joined manifold device molded in this way is shown in FIG. 9. FIG. 10 shows a cross-section taken along line II-II of FIG. 9.

As shown in FIG. 10, in molding (a secondary molding) the bond portion 20C, the mold 40, 41 brings a contact surface 20A1 of the first body 20A and a contact surface 20B1 of the second body 20B into contact with each other to form the resin channel that injects the molten resin (later bond portion 20C).

At this time, the contact surface dimensions of the first and second bodies 20A, 20B (i.e., the contact surface dimensions of the primary molded product), the contact surface of the primary molded members (the first and second bodies) project from the mating surface X of the molds 40, 41 and the contact surfaces 20A1 and 20B1 of the first and second bodies 20A and 20B may sometimes abut strongly against each other.

In this way, if the contact surfaces 20A1, 20B1 of the first and second bodies 20A, 20B abut strongly against each other, stress is generated in the contact surfaces 20A1, 20B1. Then, the even after the secondary molding to form the bond portion 20C is completed, the stress remains as residual stress in the contact surface20A1 of the first body 20A and the contact surface 20B1 of the second body 20B.

This residual stress is converted into a force in a direction separating the contact surface 20A1 of the first body 20A and the contact surface 20B1 of the second body 20B from each other when removing the manifold device 20 (molded product) from the mold 40, 4, resulting in separation at an interface D between the bond portion (secondary molding resin) 20C on the one hand and the first body 20A and the second body 20B on the other, with a risk of coolant leaking out.

Also, when the secondary molding resin (the molten resin in the resin channel) is cooled and the bond portion 20C is formed, contraction accompanying cooling of the secondary molding resin occurs. Since cooling of the molten resin starts with an outer peripheral portion thereof, residual stress is generated in the interior (the cross-sectional center) of the bond portion 20C away from the interface D because the resin particles are pulled and a portion of reduced bonding strength C that reduces overall bonding strength may appear. If the portion of reduced bonding strength C is marked, voids may be formed in some cases. If this portion of reduced bonding strength C grows into voids that ultimately reached the interfaces D1, D2 of the contact surface 20A1, 20B1, the voids become large streaks, possibly causing leakage to the outside.

In this way, when a molded resin article was molded by DSI molding, there was a technical problem of poor airtightness such as leakage to the outside of contents (for example coolant) in the molded resin article from the bond portion (the contact surfaces) between the first body 20A and the second body 20B.

Moreover, as shown in FIG. 7, in order to prevent deformation when molten resin is injected, back-up ribs are provided in the narrow internal space of the molded resin article. At the same time, when attempting to reserve a predetermined internal space inside the molded resin article, it is necessary to increase the outer dimensions of the molded resin article. Thus, there was the technical problem that the demand for greater compactness could not be met.

The present inventors have made an earnest study to solve the above technical problems that arise when DSI molding is applied to a molded resin article. As one method for solving the above problems, conceivably the holding pressure (time and pressure) of the injection pressure of the secondary molding resin (molten resin in the resin channel) can be increases. But in that case it is necessary to provide the back-up ribs as described above. In addition, it was found that the space between the contact surfaces opens at the injection pressure and the resin injected into the resin channel (bond portion) leaks, causing burrs and protrusions.

In particular, when applied to a manifold device as a molded resin article, the burrs and protrusions break loose during use and become foreign matter in the coolant, which is one cause of failure of all cooling devices, which is not preferable.

Accordingly, the present inventors focused not on increasing the holding pressure (time and pressure) of the injection pressure of the secondary molding resin but instead on suppressing the generation of portions of reduced bonding strength C caused by cooling of the secondary molding resin (molten resin in the resin channel) while also suppressing separation at the interface between the bond portion (secondary molding resin) and the first body and second body.

The present invention provides a molded resin article that suppresses the generation of a portion of reduced bonding strength while suppressing separation at the interface between the bond portion (secondary molding resin) and the first body and second body, and a method for manufacturing the molded resin article.

### Solution to Technical Problem

A molded resin article according to the present invention, conceived in order to solve the above problems, comprises: a molded first body having a main surface and a molded second body having a main surface, the molded resin article formed as a single unit formed by disposing the main surface of the first body and the main surface of the second body facing each other, a first contact surface contacting the second body formed perpendicular to the main surface of the first body, a second contact surface formed perpendicular to the main surface of the second body and contacting the first body, a bond portion bonding together the first body and the second body, the bond portion formed by injecting molten resin into a resin channel formed by the first contact surface contacting the second body and the second contact surface contacting the first body and solidifying the molten resin.

Thus, since the contact surface is formed perpendicular to the main surface (the surface at which the primary molded products mate with each other), when forming the molded resin article into a single unit by disposing the main surface of the first body and the main surface of the second body facing each other, the contact surfaces of the first and second bodies come into contact with each other but do not abut strongly as in the conventional case.

That is, the residual stress in the contact surfaces of the first and second bodies can be suppressed, separation at the interface between the bond portion (secondary molding resin) and the first body and the second body can be suppressed, and durability can be improved.

Preferably, the molded resin article further comprises a first concave fluid passage formed in the first body; and a second concave fluid passage formed in the second body, the first and second concave fluid passages forming a single fluid passage by joining the first and second bodies into a single unit, the first contact surface contacts the second body formed perpendicular to the main surface of the first body in which the first concave fluid passage is formed, the second contact surface contacts the first body formed perpendicular to the main surface of the second body in which the second concave fluid passage is formed, a bond portion bonding together the first body and the second body, the bond portion formed by injecting molten resin into a resin channel formed by the first contact surface contacting the second body and the second contact surface contacting the first body and solidifying the molten resin.

As described above, since the contact surfaces are formed perpendicular to the main surfaces, when putting the molded resin article together by disposing the main surface of the first body and the main surface of the second body facing each other, the contact surfaces of the first and second bodies come into contact with each other but do not abut strongly as in the conventional case.

That is, since the contact surfaces of the first and second bodies are not strongly brought into contact with each other, the residual stress in the contact surfaces of the first and second bodies can be maximally suppressed, and separation at the interface between the bond portion (secondary molding resin) and the first body and the second can be suppressed, and durability can be further improved. In addition, airtightness of the one fluid passage is improved, and leakage of fluid flowing through the fluid passage can be prevented.

It is also preferable that the first contact surface and the second contact surface are not coplanar.

In this way, when the first contact surface and the second contact surface are not coplanar, it is difficult for residual stress to occur at the time of secondary molding, and the generation of a portion of reduced bonding strength can be suppressed.

In addition, it is preferable that the cross-section of the resin channel orthogonal to the direction in which resin flows through the resin channel be formed in a rectangular shape. Further, in the cross-section of the resin channel, it is preferable that corners of the sides not contacting the first and second bodies be arc-shaped.

As described above, since the corner portions on the sides not abutting the first and second bodies are formed in an arc shape, when molten resin is injected into the fluid passage, the pressure component of the molding pressure (injection pressure) that acts on the arc-shaped corner portion is dispersed in the contact surface direction. That is, the molding pressure (injection pressure) is uniformly dispersed, the strength is increased due to the thick walls, and a necessary and sufficient contact area can be secured. Further, unless the molding pressure is uniformly dispersed, residual stress is generated, and the bonding surface between the primary molding surface and the secondary molding resin separates, possibly leading to leakage of the fluid contents.

It is to be noted that when the corners are formed as right angles, the molten resin does not run to the tip of the corner portion and a cavity is formed at the corner portion, the proper contact area cannot be secured, and consequently there is a risk that an improvement in bonding strength cannot be expected.

A method for manufacturing a molded resin article according to the present invention, conceived in order to solve the above problems, comprises: setting a first molded body and a second molded body in a mold; forming the resin channel by moving the mold parallel to the first contact surface and the second contact surface, contacting the first contact surface against the second body, and contacting the second contact surface against the first body; injecting molten resin into the resin channel; and removing the first body and the second body as a single unit from the mold after the molten resin injected into the resin channel solidifies and the bond portion is formed.

Thus, method of manufacturing the molded resin article according to the present invention involves the step of moving the mold parallel to the first contact surface and second contact surface and contacting the first contact surface against the second body, and contacting the second contact surface against the first body to form a resin channel.

That is, when disposing the main surface of the first body facing the main surface of the second body of first body, because although the contact surface between the first and second bodies contact with each other they do not abut strongly as in the conventional case, residual stress in the contact surfaces of the two bodies can be maximally suppressed.

As a result, separation at the interface between the bond portion (secondary molding resin) and the first and second bodies can be suppressed, and durability is further improved.

### Effect of the Invention

According to the present invention, a molded resin article and a method for manufacturing a molded resin article that suppresses separation at the interface between the bond portion (secondary molding resin) on the one hand and the first body and the second body on the other can be obtained.

### BRIEF DESCRIPTION OF THE DRAWINGS

FIG. 1 is a plan view showing a first embodiment of a molded resin article according to the present invention;
FIG. 2 is a front view of the molded resin article shown in FIG. 1;
FIG. 3 is a cross-sectional view taken along line I-I of FIG. 1;
FIG. 4 is an enlarged view of the principal parts shown in FIG. 3;
FIG. 5 is a view showing a state of growing in a direction different from a portion of reduced bonding strength shown in FIG. 4;
FIG. 6 is a perspective view showing a conventional manifold device;
FIG. 7 is a cross-sectional view for explaining conventional DSI molding;
FIG. 8 is a process chart when conventional DSI molding is applied to a manifold device;
FIG. 9 is a perspective view showing a manifold device manufactured by the DSI molding method shown in FIG. 8; and
FIG. 10 is a cross-sectional view taken along line II-II shown in FIG. 9.

### DETAILED DESCRIPTION OF EMBODIMENTS

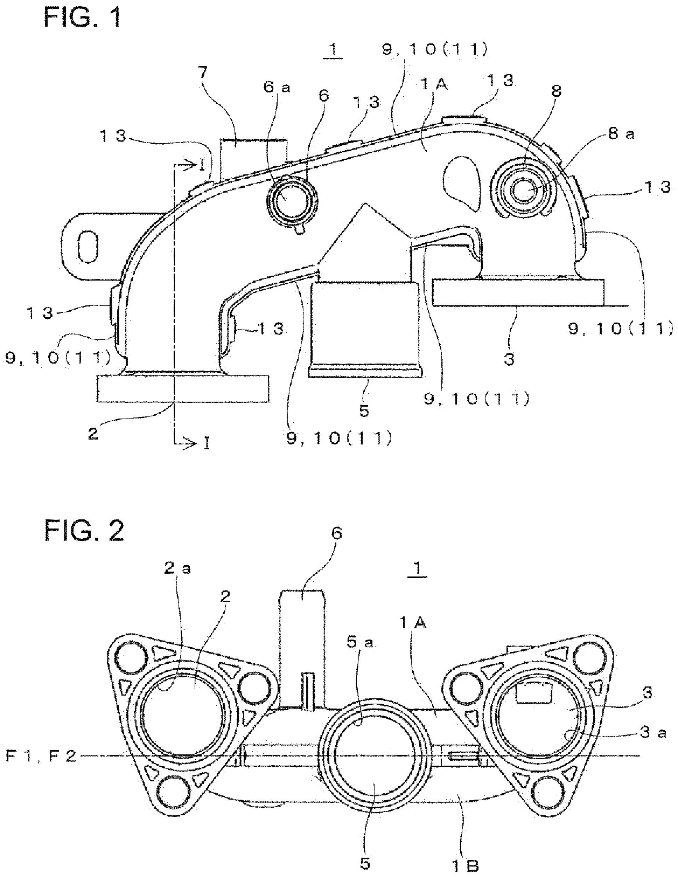

Hereinafter, the molded resin article according to the present invention will be described with reference to FIGS. 1 to 5 taking the manifold device as an example. However, the present invention is not limited to the manifold device, but can be applied to molded resin articles in general.

As shown in FIGS. 1 to 3, manifold device 1 is composed of a first body 1A and a second body 1B.

The first body 1A is molded so that a pair of coolant intake pipes 2, 3 that take in coolant respectively face in the same direction.

As shown in FIG. 1, the pair of coolant intake pipes 2, 3 communicate with each other in the manifold device 1. A fluid passage 4 for collecting coolant from the pair of coolant intake pipes 2, 3 is formed thereat.

This fluid passage 4 is formed by combining a first concave fluid passage 4a formed in the first body 1A and a second concave fluid passage 4b formed in the second body 1B. That is, by putting the first and second bodies 1A, 1B together, the first and second concave fluid passages 4a, 4b form a single fluid passage 4.

Further, the first concave fluid passage 4a forming surface side of the first body 1A is referred to as the main surface F1 of first body 1A. Similarly, the second concave fluid passage 4b forming surface side of the second body 1 B is referred to as the main surface F2. Therefore, putting together the main surface F1 side of the first body 1A and the main surface F2 side of the second body 1B forms the first and second concave fluid passages 4a and 4b into the one fluid passage 4.

In the first body 1A, a connecting pipe 5 to a radiator (not shown) is formed in a state of communicating with the fluid passage 4 at a substantially central portion of the fluid passage 4. That is, the connecting pipe 5 to the radiator is formed so that its communication opening 5a faces in the same direction as the openings 2a, 3a of the coolant intake pipes 2, 3.

A connecting pipe 6 having a communication opening 6a leading to a heater core (not shown) used as a heat exchanger for interior heating is formed at a substantially central portion of the first body 1A. This connecting pipe 6 is formed upward from the center portion of the second body 1A.

Further, a connecting pipe 7 having a communication opening to an ATF warmer is formed in communication with the fluid passage 4 in a direction opposite the side of the first body 1A on which the coolant intake pipe 2 is arranged. As is well known, this is used to shorten the warm-up time of the automatic transmission AT and to improve fuel economy just after start-up.

A connecting pipe 8 having a communication opening 8a to an EGR cooler facing upward is formed in communication with the fluid passage 4 on the side of the first body 1A on which the coolant intake pipe 3 is arranged. As is well known, this is used to cool the engine's exhaust gas for recirculation.

In the first body 1A, a contact part 9 abutting the second body 1B is provided. Similarly, in the second body 1B, a contact part 10 abutting the first body 1A is provided.

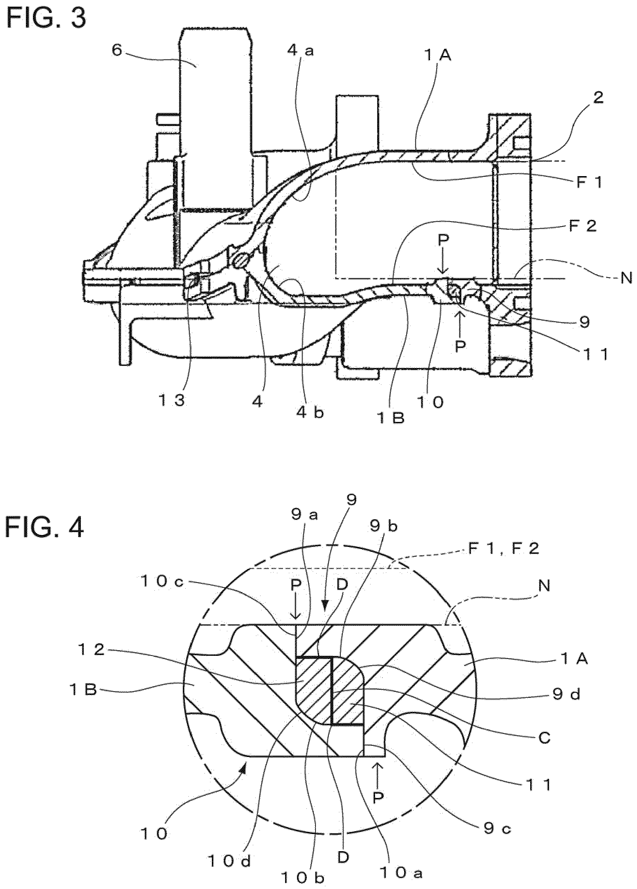

Further, as shown in FIG. 4, the contact part 9 is provided with a first contact surface 9a formed perpendicular to the main surface F1 in which the first concave fluid passage 4a is formed . A side wall 9b is formed parallel to the main surface F1 from the contact surface 9a so that the contact surface 9a protrudes. Further, a contacted part 9c is formed extending from the lower end of the side wall 9 b and perpendicular to the main surface F1.

Similarly, the contact part 10 is provided with a second contact surface 10a formed perpendicular to the main surface F2 in which the second concave fluid passage 4b is formed. A side wall 10b is formed parallel to the main surface F2 from the contact surface 10a so that the contact surface 10a protrudes. Further, a contacted parted 10c is formed extending from the lower end of the side wall 10b and perpendicular to the main surface F2.

Then, the first contact surface 9a abuts (makes contact with) the contacted surface 10c of the second body 1B and the second contact surface 10a abuts (makes contact with) the contacted surface 9c of the first body 1A, by which a resin channel 11 is formed between the first contact surface 9a and the second contact surface 10a.

As shown in FIGS. 1 and 3, a resin injection port 13 for injecting molten resin into the resin channel 11 is provided in the first body 1A and the second body 1B.

Then, molten resin is injected from the resin injection port 13 into the resin channel 11 and solidified to form a bond portion 12 bonding the first body 1A and the second body 1B together.

Note that when the molten resin is injected into the resin channel 11 and the bond portion 12 is secondarily formed, a so-called core N is disposed in the fluid passage 4 while a mold is disposed on the outside of the first body 1A and the second body 1B.

In this way, since the contact parts 9, 10 are sandwiched between the core N and the mold, deformation of the contact parts 9, 10 due to the injection pressure when the molten resin is injected into the resin channel 11 is suppressed.

Further, as shown in FIGS. 3 and 4, the first contact surface 9a and the second contact surface 10a are not on the same plane but are formed at positions offset from each other.

Thus, since the first contact surface 9a and the second contact surface 10a are not on the same plane but are offset from each other, there is little residual stress at the time of secondary molding and a portion of reduced bonding strength C is not easily generated. In the event that the portion of reduced bonding strength C is generated in the bond portion 12 and a void occurs, this proceeds first from the inside (central portion) of the bond portion 12 part (secondary molding resin) 12 to an interface D between the first body 1A and the second body 1B. Subsequently, the portion of reduced bonding strength C proceeds to the first contact surface 9a and the second contact surface 10a.

Therefore, compared to an arrangement in which the first contact surface 9a and the second contact surface 10a are coplanar, the chance of defective airtightness, etc., in the manufacturing process is reduced.

Note that, as shown in FIG. 5, even if the portion of reduced bonding strength C arises and voids are generated and travel obliquely, since the first contact surface 9a and the second contact surface 10a are not on the same plane but offset from each other, the chance of defective airtightness, etc., in the manufacturing process is reduced.

In addition, a cross-section of the flow channel orthogonal to the resin flowing direction of the resin channel 11 is formed in a rectangular shape. Note that the corner portions 9d, 1 0d of the channel cross-section perpendicular to the direction of resin flow through the resin channel 11 are preferably arc-shaped.

As a result of forming the corner portions 9d, 1 0d in the shape of an arc, when injecting the molten resin into the fluid passage, the pressure component of the molding pressure (injection pressure) that acts on the arc-shaped corner portion is dispersed toward the contact surface. That is, the molding pressure (injection pressure) is uniformly dispersed, the strength is increased due to the thick wall, and a necessary and sufficient contact area can be secured . Further, unless the molding pressure is uniformly dispersed, residual stress is generated, and the bonding surfaces between the primary molding surface and the secondary molding resin separate, possibly leading to leakage.

Note that when the corners are formed as right angles, the molten resin does not run to the tip of the corner portion, a cavity is formed at the corner portion, the proper contact area cannot be secured, and there is a risk that an improvement in bonding strength cannot be expected.

As described above, when joining the main surface F1 of the first body 1A and the main surface F2 of the second body 1B, the contact surfaces 9a and 10a of the first and second bodies are parallel to the pressing direction P of the molds. Since the contact surfaces of the first and second bodies do not strongly abut each other, the residual stress in the contact surfaces 9a and 10a of the first and second bodies can be suppressed.

As a result, separation at the interface between the bonding interface 12 (secondary molding resin) and first body 1A and second body 1B can be suppressed, and durability is further improved.

In addition, when the secondary molding resin (molten resin 11 in the resin channel) is cooled and the bond portion 12 is formed, contraction accompanying cooling of the secondary molding resin occurs. Because this cooling of the molten resin starts from the outside, even in the event that the portion of reduced bonding strength C is generated in the interior (the center section) of the bond portion 12 which is separated from the interface D and voids are generated in the interface D, these voids extend to the interface D and ultimately connect to the contact surface 9a, 10a.

However, as described above, it is possible to suppress separation at the bond portion 12 (secondary molding resin) and the interface D between the first body 1A and the second body 1B, so that the chance of defective airtightness, etc., in the manufacturing process is reduced.

A method of manufacturing the molded resin article will now be described. Since the general outline of the method for manufacturing of the manifold device is the same as the conventional one, it will be explained insofar as necessary, with reference to FIG. 8.

First, as shown in FIG. 8 (a), first bodies 1A and 1B are formed by primary molding. Next, the molded first body 1A and second body 1B are placed facing each other and set in the mold (see FIG. 8 (c)). At this time, the first contact surface 9a faces the second body 1B and the second contact surface 10a faces the first body 1A.

Note that the mold used for the primary molding maybe used for the mold in which the first body 1A and second body 1B are placed facing each other, or a mold different from the mold used for primary molding may be used.

Subsequently, one of the molds is moved parallel to the first contact surface 9a and the second contact surface 10a to form the resin channel 11.

At this time, since the first contact surface 9a is perpendicular to the main surface F1 of the first body 1A and the second contact surface 10a is formed perpendicular to the main surface F2 of the second body 1B, the first contact surface 9a slides over the contacted surface 10c of the second body 1B and the second contact surface 10a slides over the contacted surface 10c of the first body 1A to form the resin channel 11 .

Subsequently, melted synthetic resin is injected into the resin channel 11 from the injection port 13. Then, by solidifying the molten resin injected in the resin channel 11, the bond portion 12 joining the first body 1A and the second body 1B is formed.

Thereafter, by removing the first body 1A and the second body 1B now united as a single unit from the mold, the manifold device 1 is completed.

With the method for manufacturing according to the present invention, when the first body 1A and the second body 1B are joined into a single unit, because the first contact surface 9a and second contact surface 10a are formed parallel to the pressing direction P of molds, the contact surfaces 9a and 10a slide over the contacted surfaces 10c and 9c and the contact surfaces 9a and 10a of the first and second bodies are not strongly brought into contact with each other.

Therefore, the residual stress in the contact parts 9,10 of first and second bodies 1A, 1B can be maximally suppressed, separation at the interface D between the bond portion 12 (secondary molding resin) and the first body 1A and second body 1B can be suppressed, and leakage of coolant to the outside can be suppressed.

In the foregoing embodiment, a description has been given of a manifold device as an example of the molded resin article. However, the present invention is not particularly limited thereto and can be used whenever any primary molded articles are joined together into a single unit, and is applicable as well to joining together molded articles having a simple shape into a single unit.

In addition, as a so-called secondary molding (forming the bond portion) in which molded articles are joined together, the mold used for primary molding may be used, or alternatively another mold may be used.

### Description of Reference Characters

1 Manifold device
1A First body
1B Second body
4 Fluid passage
4a First concave fluid passage
4b Second concave fluid passage
9 First body contact part
9a Contact surface
9b Side wall
9c Contacted surface
10 Second body contact part
10a Contact surface
10b Side wall
10c Contacted surface
11 Resin channel
12 Bond portion
13 Resin injection port
C Portion of reduced bonding strength
D Interface
F1 Main surface of the first body
F2 Main surface of the second body

## Claims

1. A molded resin article **characterized by** having:
a molded first body 1A having a main surface F1; and
a molded second body 1B having a main surface F2,
the molded resin article joined into a single unit by disposing the main surface F1 of the first body 1A and the main surface F2 of the second body 1B facing each other,
a first contact surface 9a contacting the second body 1B formed perpendicular to the main surface F1 of the first body 1A,
a second contact surface 10a formed perpendicular to the main surface F2 of the second body 1B and contacting the first body 1A,
a bond portion 12 bonding together the first body 1A and the second body 1B, the bond portion 12 formed by injecting molten resin into a resin channel 11 formed by the first contact surface 9a contacting the second body 1B and the second contact surface 10a contacting the first body 1A and solidifying the molten resin.

2. The molded resin article according to claim 1, further **characterized by** having:
a first concave fluid passage 4a formed in the first body 1A; and
a second concave fluid passage 4b formed in the second body 1B; and
the first and second concave fluid passages 4a, 4b forming a single fluid passage by joining the first and second bodies 1A, 1B into a single unit,
the first contact surface 9a contacts the second body 1B formed perpendicular to the main surface of the first body 1A, in which the first concave fluid passage 4a formed,
the second contact surface 10b contacts the first body 1A formed perpendicular to the main surface of the second body 1B, in which the second concave fluid passage 4b formed,
a bond portion 12 bonding together the first body 1A and the second body 1B, the bond portion 12 formed by injecting molten resin into a resin channel 11 formed by the first contact surface 9a contacting the second body 1B and the second contact surface 10a contacting the first body 1A and solidifying the molten resin.

3. The molded resin article according to either claim 1 or claim 2, **characterized in that** the first contact surface 9a and the second contact surface 10b are not coplanar.

4. The molded resin article according to any one of claims 1 to 3, **characterized in that** a channel cross-section orthogonal to a direction in which resin flows through the resin channel 11 is formed in a rectangular shape.

5. The molded resin article according to claim 4, **characterized in that**, in the channel cross-section, corner portions of sides of the resin channel 11 not contacting the first and second bodies are formed in an arc shape.

6. The method of manufacturing the molded resin article according to any of claims 1 to 5, **characterized by** having:
setting a first molded body and a second molded body in a mold;
forming the resin channel 11 by moving the mold parallel to the first contact surface 9a and the second contact surface 10b, contacting the first contact surface 9a against the second body 1B, and contacting the second contact surface 10b against the first body 1A;
injecting molten resin into the resin channel 11; and
removing the first body 1A and the second body 1B as a single unit from the mold after the molten resin injected into the resin channel 11 solidifies and the bond portion 12 is formed.
